# EUROPÄISCHE PATENTSCHRIFT

(11) **EP 2 683 531 B1**
(45) Veröffentlichungstag und Bekanntmachung des Hinweises auf die Patenterteilung: **04.03.2015**
(21) Anmeldenummer: 12707979.6
(22) Anmeldetag: 22.02.2012
(51) Int. Cl.: B25C 5/11, F16B 15/08, F24D 3/14, B25C 5/16, F24D 3/12

(54) **HALTER ZUR BEFESTIGUNG EINES ROHRES EINER FUSSBODENHEIZUNG**
FASTENER FOR SECURING A PIPE OF AN UNDER FLOOR HEATING SYSTEM
DISPOSITIF DE RETENUE POUR FIXER UN TUYAU D'UN CHAUFFAGE DE SOL

(30) Priorität: 08.03.2011 DE 102011013292
(43) Veröffentlichungstag der Anmeldung: 15.01.2014
(73) Patentinhaber: Rettig ICC B.V., 6199 AA Maastricht-Airport (NL)
(72) Erfinder: SCHERBEITZ, Jürgen, CH-6472 Erstfeld (CH)
(74) Vertreter: Bremer, Ulrich
(86) Internationale Anmeldenummer: PCT/EP2012/000762
(87) Internationale Veröffentlichungsnummer: WO 2012/119705

(56) Entgegenhaltungen:
- DE-A1- 10 109 962
- DE-A1-102005 028 687
- DE-A1-102009 009 400
- FR-A1- 2 538 085

## Beschreibung

Die vorliegende Erfindung betrifft einen Halter zur Befestigung eines Rohres einer Fußbodenheizung gemäß dem Oberbegriff des Anspruchs 1.

Rohre für Fußbodenheizungen werden auf Wärme isolierenden Platten verlegt, deren Oberfläche im Regelfall noch mit einer Kaschierung versehen ist. Bevor die Rohre in eine Estrichmasse eingegossen werden, müssen sie auf den Isolierplatten fixiert werden. Für diese Fixierung werden Halter mit zwei beidseitig des Rohres in die Isolierung einsteckbaren Schenkeln verwendet, die durch ein das Rohr im montierten Zustand übergreifenden Bogen verbunden sind. Die Schenkel sind mit Widerhaken ausgerüstet, die der Auszugssicherung der Halter aus der Isolierung dienen sollen.

Viele der aus dem Stand der Technik bekannten Halter sind so ausgeführt, dass ihre Schenkel sowohl auf der Außenseite als auch auf der Innenseite mit Widerhaken ausgestattet sind. Beispiele für derartige Halter sind der EP 1 331 067 A2, der DE 103 58 442 A1 und der DE 31 25 318 C2 zu entnehmen.

Der in der DE 103 58 442 A1 offenbarte Halter hat zusätzlich zu seinen auf der Innenseite und auf der Außenseite der Schenkel angeordneten Widerhaken auf der Innenseite der Schenkel einen weiteren Widerhaken. Dieser ist aber wesentlich schwächer ausgebildet als die anderen Widerhaken und dient lediglich der Führung des Halters auf der Magazinstange eines Setzgerätes.

Aus der DE 40 09 573 A1 und DE 10 2009 009 400 A1 sind Halter bekannt, bei dem die Widerhaken auf der Vorderseite und der Hinterseite der Schenkel angeordnet sind, d.h. auf den Seiten der Schenkel, die in Längsrichtung eines verlegten Rohres weisen.

Diese bekannten Halter haben den Nachteil, dass die Widerhaken häufig durch das geschossene Loch wieder aus der Isolierschicht und durch die Kaschierung, z. B. eine aufgeklebte Folie, herausrutschen, insbesondere dann, wenn durch einen zu verlegenden Rohrbogen Zugkraft auf den Halter wirkt.

Erschwert wird die Situation durch unterschiedliche Härten der Schäume, die zur Isolation eingesetzt werden. Bei weichen Schäumen und relativ harten Widerhaken reißen diese ein zu großes Loch, bzw. im umgekehrten Fall spreizen sich die Widerhaken nach dem Einstoßen nicht wieder oder nicht wieder im ausreichenden Maße im harten Schaum. In beiden Fällen rutscht speziell im Bogenbereich eines verlegten Rohres der Halter mit einem Schenkel durch das selbst gestoßene Loch wieder heraus und erfüllt somit seine Aufgabe nicht mehr in korrekter Form. Besonders problematisch ist es, wenn der Halter erst zu einem späteren Zeitpunkt herausrutscht, insbesondere beim Einbringen des Estrichs.

Moderne Estrichsysteme werden häufig durch Rohrleitungen eingepumpt, wobei diese Rohrleitungen über das verlegte Fußbodenheizungsrohr gezogen werden. Zusätzlich müssen die Estrichleger bei ihrer Arbeit über die verlegte Fußbodenheizung laufen und stoßen hierbei häufig gegen die angetackerten Fußbodenheizungsrohre. Beides führt dazu, dass die Halter durch das selbst gestoßene Loch herausrutschen können und dann ihre Funktion nicht mehr erfüllen. Gerade in diesen Situationen ist ein derartiger Mangel sehr problematisch, da zu diesem Zeitpunkt der Heizungsbauer nicht mehr zugegen ist und somit das Rohr nicht mehr nach befestigen kann.

In der EP 0 798 503 B1 ist ein Halter beschrieben, mit dem ein Herausrutschen aus einem geschossenen Loch vermieden werden kann. Die beiden Schenkel dieses Halters weisen auf der Außen- und Innenseite angeordnete Widerhaken auf und sind in einer Ausgangsform des Halters gespreizt, vorzugsweise nach außen gespreizt, d. h., seine Schenkel verlaufen nicht parallel zueinander. Ein für die Verarbeitung derartig ausgebildeter Halter vorgesehenes Setzgerät ist so konzipiert, dass ein zu setzender Halter im Setzschacht des Setzgerätes aus seiner gespreizten Ausgangsform in eine Einstechform überführt wird, die dadurch gekennzeichnet ist, dass die Schenkel des Halters im Wesentlichen parallel zueinander ausgerichtet sind, d. h., die Schenkel werden durch diesen Vorgang gegen einander gespannt. Nach dem Einschießen des Halters in die Schaumschicht trachten die Schenkel danach, wieder in ihre Ausgangsform zurück zu kehren, d, h,. sie spreizen sich wieder nach außen, wodurch die äußeren Widerhaken in einen Bereich des Isolierschaums bzw. der Kaschierschicht gelangen, der durch den Setzvorgang unbeschädigt ist. Die inneren Widerhaken unterstützen die Spreizbewegung der Schenkel. Der gesetzte Halter ist somit sicher verankert. Als nachteilig ist anzusehen, dass zur Verarbeitung des Halters ein speziel ausgeführtes Setzgerät erforderlich ist.

Aufgabe der vorliegenden Erfindung ist es, einen Halter gattungsgemäßer Art so auszugestalten, dass sein Herausrutschen durch das selbst gestoßene Loch in der Wärmeisolierschicht oder der Kaschierung vermieden wird.

Diese Aufgabe wird erfindungsgemäß mit einem Halter gelöst, der die Merkmale des Anspruchs 1 aufweist.

Der bei einem gattungsgemäßen Halter auf der Innenseite jedes Schenkels vorgesehene wenigstens eine Widerhaken bewirkt, dass die vorderen und hinteren Widerhaken, also die auf den in Längsrichtung eines verlegten Rohres weisenden Seiten der Schenkel angeordneten Widerhaken, durch die Schräge des inneren Widerhakens nach dem Einstoßen im letzten Moment, bevor der Halter komplett gesetzt ist, nach außen verschoben werden, also in den unbeschädigten Bereich der Isolierschicht bzw. unter den unbeschädigten Bereich der Kaschierung. Der innere Widerhaken wirkt also wie ein Keil und dient dazu, die Schenkel des Halters nach außen zu verschieben, so dass der vordere und hintere Widerhaken im unbeschädigten Bereich der Isolierung wirklich greifen. Es versteht sich, dass die auf der Innenseite der Schenkel angeordneten Widerhaken ein entsprechendes Widerstansmoment gegen Biegung haben müssen, um diese Keilwirkung ausüben zu können. Je nach Rohrspannung übernehmen die inneren Widerhaken hierbei noch eine zusätzliche Haltefunktion.

Die inneren Widerhaken ermöglichen es außerdem, den erfindungsgemäßen Halter auf einem einfachen Magazin zu führen, wodurch aufwendige Kastenmagazine, wie z. B. in der DE 40 09 573 A1 beschrieben, nicht benötigt werden.

Weitere vorteilhafte Ausgestaltungen des Halters ergeben sich aus den Unteransprüchen.

Die Erfindung wird nachstehend anhand von Ausführungsbeispielen näher erläutert. In der dazugehörigen Zeichnung zeigt:

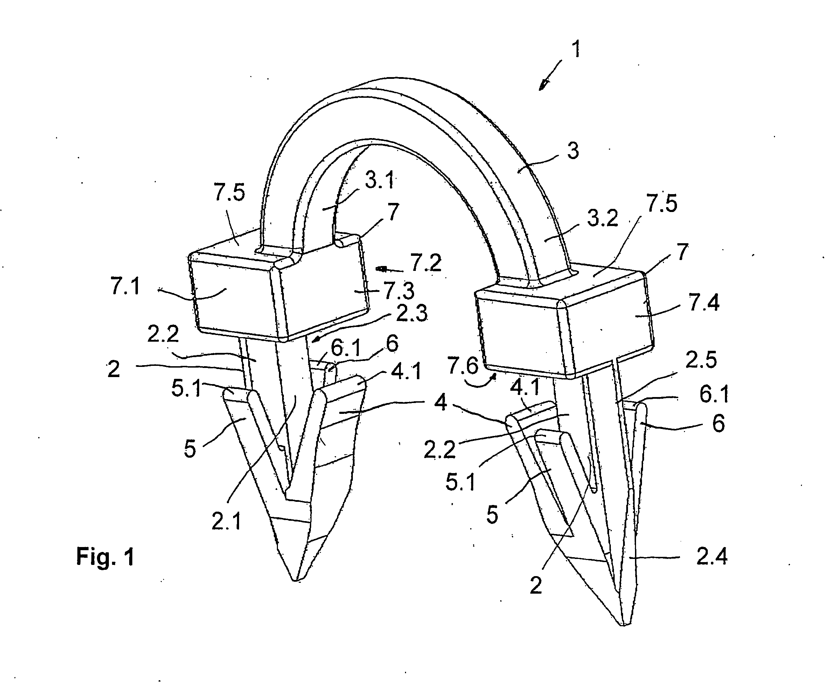

- Fig. 1: eine perspektivische Darstellung eines Halters.

Der in der Zeichnung dargestellte Halter 1 dient der Befestigung eines Rohres einer Fußbodenheizung auf einer kaschierten Wärmeisolierung. Das Rohr sowie die Wärmeisolierung sind nicht dargestellt. Der Halter 1 ist als einstückiges Kunststoff-Spritzgussteil hergestellt. Er hat im Wesentlichen eine U-form mit zwei im Wesentlichen parallel zueinander ausgerichteten Schenkeln 2, die über einen Bogen 3 miteinander verbunden sind. An ihrem, dem Bogen 3 abgewandten freien Ende sind die Schenkel 2 auf ihrer Innenseite 2.1, ihrer Vorderseite 2.2 und ihrer Hinterseite 2.3 mit je einem Widerhaken ausgestattet, die nachstehend als innerer Widerhaken 4, vorderer Widerhaken 5 und hinterer Widerhaken 6 bezeichnet werden. Die Schenkel 2 laufen in einer Spitze aus, um das Durchstoßen der Kaschierung und das Eindringen in die Wärmeisolierung zu erleichtern.

Im Übergangsbereich zwischen den Schenkeln 2 und dem Bogen 3 ist jeweils ein quaderförmiger Abstandhalter 7 ausgebildet. Die Vorderseite 7.1 und die Hinterseite 7.2 der Abstandhalter 7 bilden Anlageflächen, an denen zwei benachbarte Halter 1 auf der Magazinstange 20 eines Setzgerätes 15 (Fig. 4) aneinander liegen. Der Abstand zwischen der Vorderseite 7.1 und der Hinterseite 7.2 ist so groß gewählt, dass die Oberkanten 5.1 und 6.1 des vorderen Widerhakens 5 bzw. des hinteren Widerhakens 6 nicht über die Vorderseite 7.1 bzw. die Hinterseite 7.2 hervorstehen. Dadurch wird vermieden, dass die Halter 1 auf der Magazinstange 20 an den vorderen Widerhaken 5 bzw. hinteren Widerhaken 6 aneinander liegen, was zu Schiefstellungen der Halter 1 auf der Magazinstange 20 führen könnte.

Der Bogen 3 ist wesentlich schwächer ausgeführt als die Abstandhalter 7, d. h. sein Querschnitt ist wesentlich kleiner als der der Abstandhalter 7. Seine Innenfläche 3.1 geht etwa bündig in die Innenseite 7.3 der Abstandhalter 7 über, während seine Außenfläche 3.2 mit einem relativ großen Abstand von der Außenseite 7.4 des Abstandhalters 7 in diesen einbindet. Der Oberflächenbereich der Abstandhalter 7 zwischen dem Bogen 3 und der Außenseite 7.4 bildet eine Ansatzfläche 7.5 für einen Druckstempel des Setzgerätes 15, mit dem der Halter 1 auf ein zu verlegendes Rohr aufgedrückt wird. Die Eindringtiefe der Schenkel 2 in die Wärmeisolationsschicht ist durch die Unterseiten 7.6 der Abstandhalter 7 begrenzt.

Die Schenkel 2 haben ebenfalls einen wesentlich geringen Querschnitt als die Abstandhalter 7. Sie erstrecken sich unterhalb der Ansatzfläche 7.5 von der Unterseite 7.6 der Abstandhalter 7 nach unten, d. h., sie sind gegenüber der Einbindungsstelle des Bogens 3 in die Abstandhalter 7 nach außen versetzt, wobei ihre Außenseite 2.4 etwa bündig in die Außenseite 7.4 der Abstandhalter 7 übergeht. Der obere Bereich 2.5 der Außenseite 2.4 ist dabei schneidenartig ausgeführt. Dadurch soll das nach außen Drücken der Schenkel 2 durch die inneren Widerhaken 4 beim Setzen des Halters 1 unterstützt werden. Die Oberkanten 4.1, 5.1 und 6.1 des inneren Widerhakens 4, des vorderen Widerhakens 5 und des hinteren Widerhakens 6 liegen im Wesentlichen in einer Ebene mit gleichem Abstand von der Unterseite 7.6 der Abstandhalter 7.

## Patentansprüche

1. Halter zur Befestigung eines Rohres einer Fußbodenheizung auf einer kaschierten Wärmeisolierung mit zwei beidseitig des Rohres in die Wärmeisolierung einsteckbaren Schenkeln, die durch ein das Rohr im montierten Zustand übergreifenden Bogen verbunden sind, wobei die Schenkel auf ihrer Vorder- und Rückseite Widerhaken aufweisen, **dadurch gekennzeichnet, dass** auf der Innenseite (2.1) der Schenkel (2) mindestens ein Widerhaken (4) angeordnet und so ausgeführt ist, dass er beim Eindringen in die Wärmeisolierung den Schenkel (2) durch Keilwirkung nach außen drückt.

2. Halter nach Anspruch 1, **dadurch gekennzeichnet, dass** die Außenseite (2.4) der Schenkel (2) zumindest bereichsweise die Form einer Schneide (2.5) hat.

3. Halter nach Anspruch 1 oder 2, **dadurch gekennzeichnet, dass** im Übergangsbereich zwischen den Schenkeln (2) und dem Bogen (3) Abstandhalter (7) vorgesehen sind, deren Breite mindesten so groß ist wie der Abstand zwischen den Oberkanten (5.1, 6.1) der auf der Vorderseite (2.2) und Rückseite (2.3) der Schenkel (2) angeordneten Widerhaken (5, 6).

4. Halter nach einem der vorstehenden Ansprüche, **dadurch gekennzeichnet, dass** die Oberkanten (4.1, 5.1, 6.1) der auf der Innenseite (2.1), Vorderseite (2.2) und Rückseite (2.3) angeordneten Widerhaken (4, 5, 6) im Wesentlichen in einer Ebene liegen.

## Claims

1. Fastener for securing a pipe of an under-floor heating system on a laminated thermal insulation, said fastener having two legs which can be inserted in the thermal insulation on either side of the pipe and which are connected by an arch which straddles the pipe in the installed condition, wherein the legs have barbs on their front and rear sides,
**characterised in that**
at least one barb (4) is arranged on the inner side (2.1) of the legs (2) and is so designed that it presses the leg (2) outwards by a wedging action on penetrating into the thermal insulation.

2. Fastener according to Claim 1,
**characterised in that**
the outer side (2.4) of the legs (2) has the shape of a cutting edge (2.5), at least in certain regions.

3. Fastener according to Claim 1 or 2,
**characterised in that**
there are provided, in the transitional region between the legs (2) and the arch (3), spacers (7) the width of which is at least as great as the distance between the upper edges (5.1, 6.1) of the barbs (5, 6) arranged on the front side (2.2) and rear side (2.3) of the legs (2).

4. Fastener according to one of the preceding claims,
**characterised in that**
the upper edges (4.1, 5.1, 6.1) of the barbs (4, 5, 6) arranged on the inner side (2.1), front side (2.2) and rear side (2.3) lie substantially in one plane.

## Revendications

1. Support servant à fixer un tube de chauffage au sol sur une isolation thermique cachée avec deux branches pouvant être insérées, des deux côtés du tuyau, dans l'isolation thermique, branches qui sont reliées par un arceau passant par-dessus le tuyau en état monté, les branches présentant sur leurs faces avant et arrière des ardillons, **caractérisé en ce que** sur la face intérieure des branches (2) est disposé au moins un ardillon (4) qui est conçu de façon à pousser la branche (2) vers l'extérieur grâce à un effet de calage (2) lorsqu'il pénètre dans l'isolation thermique.

2. Support suivant la revendication 1, **caractérisé en ce que** la face extérieure (2 .4) des branches (2) présente, au moins par zones, la forme d'un tranchant (2.5).

3. Support suivant la revendication 1, **caractérisé en ce qu'**au niveau de la zone de transition entre les branches (2) et l'arceau (3) sont prévus des espaceurs (7), dont la largeur est au moins aussi grande que l'écart entre les arêtes supérieures (5.1, 6.1) des ardillons (5, 6) disposés sur les faces avant (2.2) et arrière (2.3) des branches (2).

4. Support suivant une des revendications précédentes, **caractérisé en ce que** les arêtes supérieures (4.1, 5.1, 6.1) des ardillons (4, 5, 6) disposés sur la face intérieure (2.1), la face avant (2.2) et la face arrière (2.3) se situent essentiellement sur un plan.
